# EUROPEAN PATENT APPLICATION

(11) **EP 4 817 828 A2**
(43) Date of publication of application: **07.10.2026**
(21) Application number: 26193652.0
(22) Date of filing: 19.05.2021
(51) Int. Cl.: B27N 7/00

(54) **DECORATIVE PANEL**

(30) Priority: 19.05.2020 NL 2025620
(62) Document number(s) of the earlier application(s) in accordance with Art. 76 EPC: 25227767.8 / 4 699 768; 21728020.5 / 4 153 823
(71) Applicant: Champion Link International Corporation, 2640 The Valley (AI)
(72) Inventor: BAERT, Thomas Luc Martine, 9830 Sint-Martens-Latem (BE); VAN POYER, Tom, Jiaxing, 314100 (CN); BOON, Sven, Jiaxing, 314100 (CN)
(74) Representative: Patentwerk B.V.

(57) **Abstract**

The invention relates to decorative panel and a method for producing such panel. The panel according to the present invention comprises a core layer, and a decorative top layer attached to the upper core surface of said core layer. The panel further comprises at least one chamfer provided at at least one of said side edges, wherein the chamfer extends through at least part of the decorative top layer and/or through at least part of the core layer, and the panel comprises at least one coating layer.

## Description

The invention relates to a decorative panel, in particular a building panel. The invention also relates to a method for producing a decorative panel, in particular a building panel.

Decorative wall-, floor- and ceiling panels are known in a wide variety of embodiments. Such decorative panels might for example attempt to create the illusion and appearance of real marble, stone, ceramic or wood. The decorative panels are generally produced in large boards which are coated and cut into planks. Further processing can optionally include the milling of a tongue and groove at the edges of the panels, used to interconnect adjacent floor panels. Panels can also have substantially vertical edges and abutted approximate each other when installed. The location where the top surfaces of adjacent panels meet can further feature an edge finishing. In terms of aesthetics, completely horizontal panels provide a very uniform look which may create the (undesired) impression that they were made up of a single piece, such as linoleum. The edges of decorative panels therefore often feature a chamfer or bevel to enhance the visual effect of real material such as wood, real stone or ceramic, simulating a grout or mortar of a tile, or the chiselled or milled edge of a wood panel. A benefit of these bevelled panels is that they allow for a higher degree of error in both production as installation as height differences are not noticeable even if the panels are not perfectly levelled. The slightly angular cut also reduces the risk of sharp edges, and therefore the risk of cutting the end user. Aesthetically, the chamfer or bevel provides a very slight angle or inclination that is visible on the finished flooring, wall panel or ceiling panel surface, thereby providing further some degree of dimensionality and realism to the panel. More advanced methods to further enhance the visual effect of this panel edge include methods of providing a decorative design onto the surface of the beveled edge. This is an upgrade of regular stained or painted bevels as it aims to have the décor or visual of the panel surface continue along the chamfer or bevel surface. For example, U.S. Pat. No. 7,918,062 discloses methods and systems for decorating at least one bevel surface or other surface of a laminated flooring.

In particular, the method herein also comprises the steps of laminating the resilient flooring layers into boards, coating the top surface of the boards, cutting the boards into panels, acclimating and profiling the panels, beveling at least one side edge, printing the bevel surface using a printer, sealing at least one side edge and packaging the panels. It is also disclosed therein that the bevel surface can be decorated by non-transfer printing such as digital printing by an ink jet printer such as a piezoelectric drop-on-demand (DOD) printer that tries to achieve a colour and pattern to be placed on the bevel surface that matches the print design (décor pattern or face design) of the laminated flooring. However, the production method of this type of bevel is very costly and requires a very high accuracy in manufacturing. It is also sensitive to staining and damage much like a regular painted bevel and colour differences between the bevel and the top surface are still often observed.

The object of the invention is to provide a decorative building panel, such as a wall, flooring or ceiling panel and a method of manufacturing such panel which overcomes at least part of the above-mentioned disadvantages of the prior art.

The invention provided thereto a decorative panel, in particular a building panel, comprising:
- at least one core layer, the core layer comprising an upper core surface and a bottom core surface and at least one pair of opposite side edges,
- at least one decorative top layer attached to the upper core surface of said core layer, the decorative top layer comprising an upper surface,

wherein the panel preferably comprises at least one chamfer provided at at least one of said side edges, wherein the chamfer extends through at least part of the decorative top layer and/or through at least part of the core layer,
and preferably wherein the panel comprises at least one coating layer which covers at least part of the upper surface of the decorative top layer and at least part of the surface of said chamfer.

The decorative panel according to the present invention benefits of several advantages with respect to known decorative panels which are provided with a chamfer. The at least one coating layer can provide a protective function for both the upper surface of the decorative top layer and the chamfer(s). The coating layer can for example protect at least the chamfer from damage and/or staining. As the coating layer overlaps between the upper surface of the decorative top layer and the chamfer the coating layer seamlessly and smoothly flows over from the upper surface of the decorative top layer to the surface of the chamfer. This ensures a more durable protective function of the coating layer. The coating layer is typically provided after the panel is provided with at least one chamfer. Hence the coating layer can be applied in a single manufacturing step to both the upper surface of the decorative top layer and the chamfer(s). The coating layer is of influence of the visual appearance of the panel, for example due to its influence of the gloss level of the panel. The application of at least one layer of cured coating on the top surface of the decorative top layer and also on the chamfer can contribute to consistency of the gloss level on the upper surface of the decorative top layer and the surface of the chamfer. As the coating layer is typically applied as a final manufacturing step, this provides a large flexibility for the manufacturing process and the adaptability of the final product. Due to this freedom of manufacturing and/or due to the at least one coating layer covering at least part of the upper surface of the decorative top layer and at least part of the surface of at least one chamfer, the gloss level of the panel, and in particular of the upper surface of the panel including the chamfer, can be controlled to a large extent. For an embodiment wherein also a wear layer is present, it has been found that the direct contact of wear layer, which generally contains plasticizers, with staining agents can be prevented when applying at least one coating layer thereby ensuring quality finishing of the floor panel including its chamfer. Also, the layers underneath the wear layer, such as the décor layer and/or the core layer are found to be protected from contamination of the staining agent. Furthermore, consistency in gloss level across the visible surface of the decorative panel is also obtained as application of paint or coating is not executed in a separate process. The panel according to the invention allows further to view the décor of the panel without the need for stains, pigments, digital prints and the like, creating the visual illusion of form or substance due to the application of the coating layer according to the present invention.

Where it is referred to a chamfer also a bevel or beveled edge can be meant. The coating layer according to the present invention is typically a cured coating layer. The coating layer covers at least part of the upper surface of the decorative top layer, but may also substantially fully cover the upper surface of decorative top layer. The decorative top layer can for example be attached to the core layer via a fusion process, such as via hot pressing. However, the decorative top layer could also be attached to the core layer by means of an adhesive. The decorative panel is in particular a building panel. The panel can for example be a floor, wall and/or ceiling panel, in particular configured for forming a floor, wall and/or ceiling covering.

In a preferred embodiment, the coating layer is a substantially transparent and/or translucent coating layer. This may enhance the visibility of the decorative top layer and/or the core layer in case the chamfer extends into the core layer. For such embodiment, the presence of colour differences between different batches of produced panels can be prevented.

In a preferred embodiment of the panel, at least two opposite side edges of the core layer are provided with a chamfer. It is for example conceivable that the panel comprises at least two chamfers, wherein a first chamfer is provided at a first side edge of the panel and a second chamfer is provided at a second side edge which opposes said first side edge, wherein each chamfer extends through at least part of the decorative top layer and/or through at least part of the core layer. It is conceivable that a first chamfer is provided at a first side edge of the panel and a second chamfer is provided at a second side edge which is not opposite to said first side edge. It is for example conceivable that the panel is substantially rectangular, and that each long side of the panel is provided with a chamfer which extends over the length of the panel. It is also conceivable that each side edge of the panel is provided with a chamfer, which preferably extends over the full side edge. In addition that the panel according to the present invention can be a rectangular panel, it is also conceivable that the panel is substantially square or parallelogram shaped.

The decorative top layer typically comprises at least one décor layer and at least one further layer. The decorative top layer of the panel may for example comprise at least one décor layer and at least one transparent wear layer. Said transparent wear layer may for example be provided on the upper surface of the décor layer. Preferably, the transparent wear layer covers the upper surface of the décor layer entirely. Both the décor layer and the wear layer are preferably attached onto the core layer prior to cutting of at least one chamfer into the panel. At least one wear layer can for example be based on any thermoplastic or thermosetting material.

Non-limiting examples of thermoplastic or thermosetting materials which could be used are polyvinyl chloride (PVC), polystyrene (PS), polyethylene (PE), polyurethane (PU), acrylonitrile butadiene styrene (ABS), polypropylene (PP), phenolic and/or melamine or formaldehyde resins. possibly containing particles improving its abrasion resistant properties such as aluminium dioxide, silicon carbide, quartz, diamond particles and the like. It is conceivable that the wear layer has a larger thickness than the décor layer. It is for example possible that at least one wear layer has a thickness of about 0.15 to 1 mm. The total thickness of the decorative top layer is typically between 0.17 to 1.07 mm. The wear layer may further comprise a filler, for example based on calcium, carbonate or magnesium.

It is also conceivable that the decorative top layer comprises at least one décor layer and at least one base coating layer. In a beneficial embodiment, the panel comprises at least one base coating layer which covers at least part of the upper surface of the décor layer. In case the decorative top layer also comprises at least one wear layer, the base coating layer is preferably provided on an upper surface of the wear layer. The base coating layer is in particular applied in order to protect the panel, and in particular the decorative top layer, during further processing, for example during cutting, sawing, punching, profiling, edging and/or beveling of the panel. The base coating layer is preferably applied prior to the chamfer(s) are provided and/or prior to profiling of the panel. The base coating layer is preferably substantially transparent or translucent. This enables that the décor layer can be better observed. The base coating layer can for example be formed by a substantially transparent primer. The base coating layer can also be formed of any of the coating as described for the present invention for forming the at least one coating layer. The application of at least one base coating layer to the upper surface of the décor layer prior to steps of cutting, profiling and/or beveling can contribute to the reduction of resistance between the cutting tools and the floor panel during the cutting, profiling and/or beveling step. This can prevent that a white line is forming in the panels and may also reduce irregularities in the cut line between adjacent panels.

The coating forming the coating layer is preferably applied with a weight of, or in a quantity of, at least 1 to 50 g/m2 per layer, preferably 4 to 40 g/m2 per layer, and more preferably 5 to 15 g/m2 per layer. The viscosity of the coating layer is preferably smaller than 5000 Pa.s at 25 degrees Celsius, preferably between 500 and 3000 Pa.s at 25 degrees Celsius and more preferably between 800 and 1500 Pa.s at 25 degrees Celsius, in an uncured condition. Hence, said viscosity values apply to the material of the coating layer prior to and/or during applying of the coating layer upon the panel. The actual preferred load and/or preferred viscosity is at least partially dependent on the angle of the chamfer. For the abovementioned preferred load and preferred viscosity ranges, the inventors notes optimal visual results, with the surface tension and viscosity of the applied coating allowing for a rounded effect after curing, a controlled gloss range, and an optimal adhesion to both the upper surface of the decorative top layer and the surface of the chamfer.

Within the scope of this invention, it is conceivable that the coating applied for forming at least one coating layer comprises at least one additive. It is for example possible that an additive is applied in order to lower the viscosity and/or increase the flexibility of the (uncured) coating. It is also conceivable that the additive enhances the visual properties of the coating layer after curing. An additive can for example be a monomer and/or a diluent. It is for example possible that at least one additive is a monomer, in particular a crosslinking acrylate monomer, a polymerizable cyclic/aromatic acrylate monomer and/or a diluent acrylate monomer. For example, said at least one monomer can comprise at least one of the following compounds: trimethylolpropane triacrylate, triethylene glycol diacrylate, tripropylene glycol diacrylate, or 1, 6-hexandiol diacrylate, phenylphenoxy ethyl acrylate, isobornyl methacrylate, cyclohexane dimethanol dimethacrylate, or ethoxylated bisphenol diacrylate, phenylphenoxy ethyl acrylate and isobornyl methacrylate, cyclohexane dimethanol dimethacrylate or ethoxylated bisphenol diacrylate, phenylphenoxy ethyl acrylate, dipropylene glycol diacrylate, isobornyl acrylate, 1,6-hexandiol diacrylate, diethylene glycol diacrylate, 1,4-butanediol diacrylate, tripropylene glycol diacrylate, and/or diethylene glycol diacrylate. It is possible that about 20 wt% to about 40 wt %, preferably 20 wt % to about 35 wt %, more preferably 25 wt % to about 30 wt % of monomer is present based on total weight of the coating formulation. It is also conceivable that the coating comprises at least one oligomer. Such oligomers can be any polymer or polymer intermediate or resin containing relatively few structural units. Several types of (meth)acylated oligomers can be used such as epoxies, aliphatic urethanes, aromatic urethane, polyesters, acrylics and specialty resins.

Combinations of at least one of an aliphatic urethane acrylate oligomer, crosslinkable polyester acrylate oligomer and/or crosslinkable self-matting oligomer may be used.

It is conceivable that the panel comprises at least one coating layer which covers at least part of the upper surface of the decorative top layer and at least part of the surface of said chamfer. It is also conceivable that the panel comprises multiple coating layers which cover at least part of the upper surface of the decorative top layer and at least part of the surface of said chamfer. It is for example conceivable that the panel comprises at least one first coating layer which covers at least part of the upper surface of the decorative top layer and at least part of the surface of said chamfer, and at least one second coating layer which covers at least part of the upper surface of the decorative top layer and at least part of the surface of said chamfer. The visual appearance and surface properties such as stain, abrasion and scratch resistance can be further controller when applying multiple coating layers. It is conceivable that at least two coating layers have different material properties. However, it is also conceivable that said multiple coating layers are substantially identical coating layers. Said at least one coating layer covering at least part of the upper surface of the decorative top layer and at least part of the surface of said chamfer is applied after cutting, sawing, punching, profiling, edging and/or beveling of the panel. Said at least one coating layer is applied after the chamfer(s) are provided and/or after profiling of the panel.

The angle at which the chamfer(s) provides the best visual effect ranges from 2 degrees to 30 degrees, more preferably from 4 to 15 degrees and even more preferably 6 to 9 degrees. The depth of the chamfer can for example range from 0.1 mm to 0.55 mm, in particular from 0.2 mm to 0.35 mm, and more in particular from 0.5 mm to 3 mm, and even more in particular from 1.5 mm to 2.5 mm. Said preferred ranges are found to the beneficial for the visual effect, especially but not necessarily, in combination with abovementioned viscosity and/or load ranges.

In a preferred embodiment, the decorative top layer includes at least one décor layer selected from the group comprising: a PVC decorative film, a PP decorative film, a PET decorative film, a stone veneer and/or a wood veneer. It is also conceivable that the decorative layer, and in particular the décor layer, comprises a plurality of impregnated layers such as a high-pressure laminate (HPL) or continuous-pressure laminate (CPL). Further non-limiting examples are the décor layer being a decorative plastic, vinyl and/or linoleum. In a further possible embodiment, the décor layer can be formed by a decorative print which is printed directly on the upper core surface of the core layer. Optionally, at least one primer can be provided upon the upper core surface prior to the decorative print being applied. The decorative print can for example be provided via digital printing by an ink jet printer such as but not limited to a piezoelectric drop-on-demand (DOD) printer.

In a possible embodiment of the panel, the decorative top layer includes a tactile texture, preferably of at least 0.1 mm depth. Such tactile texture may provide an enhanced visual effect. The tactile structure may for example have an irregular tactile texture. It is also conceivable that only part of the decorative top layer is provided with a tactile texture. In another possible embodiment, both the upper surface of the decorative top layer and the surface of the chamfer can include a tactile texture, preferably of at least 0.1 mm dept. It is for example possible that the tactile texture is provided in at least one wear layer, if applied.

The coating layer as applied in a panel according to the present invention can for example be a polyurethane coating, an acrylic coating, and/or an epoxy polyol coating. Such coating can for example be an ultraviolet (UV) or electron beam (EB) curable coating. It is further conceivable that the coating layer comprises a thermoset resin and a photoinitiator cross-linked by a UV or electron beam curing process. The coating formulation, or resin, used herein may comprise at least one component chosen from the groups of photoinitiators, additives, monomers and/or oligomers. Said photoinitiator can be any chemical compound that decomposes into free radicals when exposed to UV to initiate crosslinking of coatings directly on a surface. Said photoinitiator can be any radical photoinitiator or cationic photoinitiator. It is conceivable that the at least one photoinitator can be a compound selected from the group comprising of: acrylate- or styrene-based formulations, methyl-2-benzoylbenzoate, 2-hydroxy-2-methyl-1-phenyl-1propanone, benzyl dimethyl ketal, 1-hydroxy-cyclohexylphenyl-ketone, or methyl benzoyl formate, or other photoinitiator, or any combination thereof. It is possible that the photonitiator can comprise of about 2 wt% to about 10 wt %, preferably 2 wt% to about 5 wt %, more preferably 3 wt % based on total weight of the coating formulation. Additives in the coating formulation can be any chemical agents that add various properties to the coating. For example, the additive can be pigments, abrasive particles, fillers, wetting agents, UV-curable silicones, matting agent particles, adhesion promoters (i.e. acrylic based), etc. Additives are mainly included for performance tuning. It is possible that the additives can comprise of about 5 wt% or less based on total weight of the coating formulation.

In a preferred embodiment, the coating layer covers at least 1%, preferably at least 25%, more preferably at least 50% and even more preferably at least 95% of the upper surface of the decorative top layer. In a further preferred embodiment, the coating layer covers at least 50%, preferably at least 75%, more preferably at least 95% of the surface of at least one chamfer. It is also conceivable that the upper surface of the decorative top layer and the surface of the chamfer are substantially entirely covered by the coating layer.

In yet another embodiment, another coating layer covers at least part of a bottom surface of the decorative layer. This bottom coating layer can for example be formed by a substantially transparent primer. The bottom coating layer can also be formed of any of the coating as described for the present invention for forming the at least one coating layer. Said bottom coating layer may also be pigmented thereby providing a background colour thereof or may also be provided with a print design to further augment the aesthetics of the at least one chamfer. Said print design is further conceived to be provided on top of the bottom coating layer. It is further conceivable that the print design covers substantially the entire upper surface of the decorative top layer and at least partially, substantially entirely the surface of the chamfer.

In a possible embodiment of the panel, the depth of at least one chamfer is smaller than the thickness of the decorative top layer. When it is referred to the depth of a chamfer, a direction perpendicular to a plane defined by the upper surface of the top surface is meant. Hence, at least one chamfer can extend though at least part of the decorative top layer. If the top layer comprises a plurality of layers, it is for example conceivable that a chamfer extends through at least the upper layer of the plurality of layers. At least one chamfer preferably has a depth of at least 0.2 mm. Further, at least one chamfer preferably has a width of at least 0.55 mm.

In yet another preferred embodiment, at least one chamfer fully extends through the decorative top layer. The chamfer can thus extend through all layers of the decorative top layer in case the decorative top layer comprises a plurality of layers. In such embodiment, it is conceivable that the chamfer extends through both the decorative top layer and the core layer. This means that the depth of the chamfer can be larger than the thickness of the decorative top layer. This embodiment may provide an appealing visual effect due to different panel layers being visible in case a substantially transparent or translucent coating layer is applied.

The extent of gloss of a paint, a lacquer or a (decorative) coating layer can be determined via the gloss level. The level of gloss can be determined on a scale from 0 to 100%, with 0 being no gloss and 100% being perfectly mirror-like. In a beneficial embodiment, the gloss level of the upper surface of the decorative top layer substantially equals the gloss level of the surface of the chamfer. In such embodiment, an optically appealing effect can be created. In another preferred embodiment, the gloss level of at least one coating layer ranges from 3% to 100%, preferably from 40% to 60%. Such gloss level can be classified as 'high gloss'. In yet another preferred embodiment, the gloss level of at least one coating layer ranges from 3% to 12%, preferably from 4% to 8%. Said gloss level can be classified as 'matte'. It is also conceivable that the gloss level of at least one coating layer is in the range of around 3% to 4%. Said gloss level can be classified as 'ultra matte'.

In a preferred embodiment, at least one chamfer has a substantially linear shape. At least one chamfer having a linear shape in practice involves the chamfer having an inclined surface. In such embodiment, the chamfers of two adjacent panels, in particular (inter)connected panels, typically define a V-shape. In another possible embodiment, at least one chamfer has a substantially convex shape. It is also conceivable that all chamfers of the panel have a substantially convex shape. Preferably, the chamfers of two adjacent panels, in particular (inter)connected panels, having a substantially convex shape define a substantially U-shaped cut-out portion. In yet another embodiment, it is conceivable that at least one chamfer has a substantially square shape. Preferably, the chamfers of two adjacent panels, in particular (inter)connected panels, having a substantially square shape define a grout, for example an imitation grout, also called a pre-grout. It is conceivable that this pre-grout extends at least partially beyond the visible décor and/or into part of the core layer. It is possible that the exposed material is pigmented specifically to feature a colour that matches the décor layer present on the top surface of the panel, in order to create a pleasing visual effect. It is possible that the exposed material is a further or second transparent layer, featuring a further or second décor layer that becomes visible when the pre-grout is applied. This specific embodiment lends itself to great flexibility on achieved visual effect when viewed from above.

It is conceivable that at least one chamfer is applied on the top surface of the panel, yet not immediately adjacent to the panel's side edge, thereby creating on one single panel the visual effect of at least two smaller panels abutted to one another. The chamfer can for example be formed by an elongated groove. It is conceivable that the at least one chamfer, or elongated groove, is applied approximate to a middle of the panel surface. It is further conceivable that at least two parallel chamfers are applied on the panel surface separated from one another at equal distances. It is also possible that at least two chamfers are applied at an angle to one another, such as at an angle of 90 degrees. In a preferred embodiment, the at least one chamfer applied on the top surface of the panel features at least partially a curvilinear shape. It is conceivable that the depth of this chamfer further extends into the core layer and the length extends to at least one of the panel's side edges. In one embodiment, the panel further features a chamfer on at least one edge, preferably two, possibly all edges of the panel.

In yet another embodiment, at least one chamfer has a substantially curvilinear shape or surface in profile, in particular in a plane perpendicular to the plane defined by the top surface of the panel. At least one chamfer having a curvilinear shape in practice features a continuous or non-continuous curved form that is bounded by at least one curvilinear line or edge. In one embodiment, the chamfer of two adjacent panels, in particular (inter)connected panels, may define shapes such as but not limited to: semi - curvilinear triangle / quatrefoil / ellipse / crescent / trefoil / circlular and the like. In one embodiment, the coating surface also takes on a curvilinear shape, whereas the film and the protective layer are substantially flat on a plane defined by the top surface of the panel, and the curvilinear chamfer surface is a cut surface provided by means of a tenoning process, or a positive 3D printing process, or a negative application process where transparent surface material from wear layer or coating is selectively cured and/or removed. It is also conceivable that the film and wear layer also take a curvilinear shape by pressing. It is also conceivable that the at least one chamfer is pre-grouted such that the coating thereof covers part of the chamfer surface. Due to the viscosity range of the coating, a desired curvilinear shape in said pre-grouted chamfer is achieved. This embodiment is beneficial both in the chamfer's visual effect and function as curvilinear shapes substantially enclose more space/volume per surface area than a chamfer that is bound by straight line or has polygonal shape thereby enhancing the overall aesthetics of the chamfer and the (inter)connected panels. Moreover, due to the viscosity range of the coating, an effective closing of the pores of the grout's surface is achieved, thereby greatly enhancing the stain resistance of the grout's material surface.

In yet another embodiment, the at least one chamfer is formed by means of an oscillating knife or saw blade. In this embodiment, the at least one chamfer is provided with an uneven surface texture. As a result, the at least one chamfer achieve a textural effect when adjacent panels are pressed together thereby creating a three-dimensional effect and/or a gloss gradient, when finished with the at least one coating layer according to the present invention.

It is conceivable that any of the above described effects and features are combined, such as the combination of a pre-grouted chamfer with a curvilinear and/or a chiselled chamfer.

In a possible embodiment, at least one core layer may comprise at least a natural material, a mineral material, a thermoplastic or thermosetting material or a combination thereof. The natural material may comprise wood, engineered wood, a fiberboard such as medium-density fiberboard (MDF) or high-density fiberboard (HDF), green fiberboard, mycelium and the like. The mineral material may comprise a magnesium-based mineral such as magnesium oxide (MgO), magnesium chloride (MgCl or MOC cement), magnesium oxysulfate (otherwise known as MOS cement). At least one core layer of the panel according to the present invention may comprise at least one mineral material and at least one binder. It is also conceivable that the core layer comprises a composite material, comprising at least one mineral material and at least one thermoplastic or thermosetting material. It is for example conceivable that the mineral material comprises calcium carbonate (CaCO3), chalk, clay, calcium silicate and/or talc. The use of at least one mineral material in the core layer is conceived to impart a sufficient rigidity thereby ensuring dimensional stability of the panel. The core layer may further comprise at least one thermoplastic or thermosetting material. Non-limiting examples of thermoplastic or thermosetting materials which could be used are polyvinyl chloride (PVC), polystyrene (PS), polyethylene (PE), polyurethane (PU), acrylonitrile butadiene styrene (ABS), polypropylene (PP), phenolic and/or melamine or formaldehyde resins. The use of at least one thermoplastic or thermosetting material in the core layer is conceived to impart flexibility characteristics to the panel when deemed necessary, for example when flexibility is required to achieve engagement of a locking mechanism. The core layer may also comprise a combination of any of the materials previously mentioned. It is conceivable that the composite material comprises at least 20% by weight of mineral material and/or 15% to 40% by weight of thermoplastic or thermosetting material. This range is found to secure sufficient stability and strength of the core layer while also allowing for necessary flexibility thereof and improving temperature resistance as well.

Preferably, at least one pair of opposite side edges is provided with complementary coupling parts. For example, the core layer comprises at least one pair of complementary coupling parts on at least two of its opposite side edges. Said coupling parts may for example be interlocking coupling parts configured for mutual coupling of adjacent panels on multiple directions. Preferably, said interlocking coupling parts provide locking in both horizontal and vertical directions. Any suitable interlocking coupling parts as known in the art could be applied. For example, said interlocking coupling parts may be in the form of complementary tongue and groove, male and female receiving parts, a projecting strip and a recess configured to receive said strip or any other suitable form. It is conceivable the mutually coupling parts require a downward scissoring motion when engaging, or are locked together by means of a horizontal movement. It is conceivable for provisions of reinforcement in the interlocking coupling parts to improve strength and prevent breakage thereof during installation of the panels. For example, the interlocking coupling parts may be reinforced with materials such as but not limited to fiberglass mesh, reinforcing sheets, carbon fibers, carbon nanotubes, ceramics, glass, arrays of metallic or non-metallic rods, or polymer compounds integrally formed in the core layer. It is also conceivable that a strengthening coat layer of micro or nanotechnology is added on the surface of the interlocking coupling parts. If interlocking coupling parts are present, it is conceivable and preferred that the highest point of the protruding coupling parts are positioned lower than the lowest point of the applied coating. This avoids application of the coating layer according to the invention onto the interlocking parts.

It is further conceivable within the scope of the invention that the panel, and in particular the wear layer if applied and/or the chamfer receive a corona, plasma jet, and/or infrared treatment prior to the at least one coating layer being provided. It is also possible that the coating forming the at least one coating layer is subjected to an excimer and/or exciplex treatment, in particular prior to curing of the coating layer.

The panel according to the present invention could optionally comprise at least one backing layer. Such backing layer, if applied, is preferably attached to the bottom core surface of the core layer. It is also conceivable that the panel comprises (at its bottom surface) at least one balancing layer, generally composed of at least one layer comprising lignocellulose and a cured resin. The panel may also comprise at least one acoustic layer, usually composed of a low density foamed layer of ethylene-vinyl acetate (EVA), irradiation-crosslinked polyethylene (IXPE), expanded polypropylene (XPP), expanded polystyrene (XPS), but also nonwoven fibers such as made from natural fibers like hemp or cork, or recycled/recyclable material such as PET or rubber. The density of this acoustic layer, if applied, preferably has a density between 65 kg/m3 and 300 kg/m3, most preferably between 80 kg/m3 and 150 kgm3.

The invention also relates to a method for producing a decorative panel, in particular a panel according to the present invention, the method comprising the steps of: a) providing at least one core board, the core board comprising an upper core surface and a bottom core surface, b) attaching at least one decorative top layer upon the upper core surface of said core board, c) cutting the core board, in particular the laminated core board, into at least two panels, d) providing at least one side edge of at least one panel with a chamfer, such that the chamfer extends through at least part of the decorative top layer and/or through at least part of the core layer, and preferably e) applying a coating upon the upper surface of the decorative top layer and the (upper) surface of at least chamfer such that a coating layer is formed which covers at least part of the upper surface of the decorative top layer and at least part of the (upper) surface of said chamfer.

The steps according to said method are generally subsequent steps. Typically, multiple core layers can be formed from a single core board. After steps a) and b) a laminated core board comprising a core layer and a decorative top layer is obtained. Subsequently, cutting of the core board, in particular the laminated core board, into at least two panels results in that at least two panels are obtained which can be further processed into a desired panel.

At least part of at least one chamfer can be made by means of an oscillating knife or saw blade. It is also conceivable that at least part of at least one chamfer is defined by means of a pressing method.

The invention also relates to a method for producing decorative panel, wherein step b) comprises the steps of b1) providing at least one décor layer and b2) at least one transparent wear layer and/or at least one base coating layer. Step b) of the method may further comprise the step of providing a texture, in particular a tactile texture, to the upper surface of the decorative top layer. Said texture is typically provided in the wear layer and/or base coating layer, if applied. At least part of the texture, in particular the tactile texture, preferably has a depth of at least 0.1 mm. It is further conceivable that at least one further base coating layer is applied after the provision of the texture. The texturing step can for example be done via embossing and/or sanding. More in particular, the texturing step can be done via sanding, using a grit size of at least 150, preferably between 200 and 280. A non-limiting example of a grit size to be used is 240. Yet it is also possible that the texturing step is done via embossing, preferably via applying heat and pressure, for example by making use of press rollers and/or press plates.

Step d) of the method may also comprises the step of profiling and/or edging at least one side edge of at least one panel. During this step, at least one side edge of the panel may be provided with complementary coupling parts. Step a) of the method may further comprise the step of forming of a core board, in particular via extrusion. Attaching of the core board and the decorative layer may for example be done via a fusion process, such as via hot pressing. If applied, the extrusion process and fusion process can be performed substantially simultaneously during manufacturing of the panel.

The coating applied during step e) can be any of the abovementioned coating related to the present invention. Application of the coating can for example be executed with a weight of at least 1-50 g/m2, preferably 4-40 g/m2, more preferably 5-15g/m2. It is also conceivable that multiple coating layers are applied during step e). Each coating layer is preferably applied upon the upper surface of the decorative top layer and the (upper) surface of at least chamfer such that a coating layer is formed which covers at least part of the upper surface of the decorative top layer and at least part of the (upper) surface of said chamfer.

The method may further comprise the step of providing and attaching at least one backing layer to the bottom surface of the core layer.

The invention will be further elucidates based upon the following non-limitative figures. Herein shows:
- Figure 1 a first possible embodiment of a panel according to the present invention;
- Figure 2 a second possible embodiment of a panel according to the present invention;
- Figure 3 a third possible embodiment of a panel according to the present invention;
- Figure 4 a fourth possible embodiment of a panel according to the present invention;
- Figure 5 a fifth possible embodiment of a panel according to the present invention;
- Figure 6 a sixth possible embodiment of a panel according to the present invention;
- Figure 7 a seventh possible embodiment of a panel according to the present invention;
- Figure 8 an eighth possible embodiment of a panel according to the present invention; and
- Figure 9 a nineth possible embodiment of a panel according to the present invention.

Each figure shows a cross section of a single panel or two adjacent decorative panels which are mutually connected, coupled, attached to or neighbouring another.

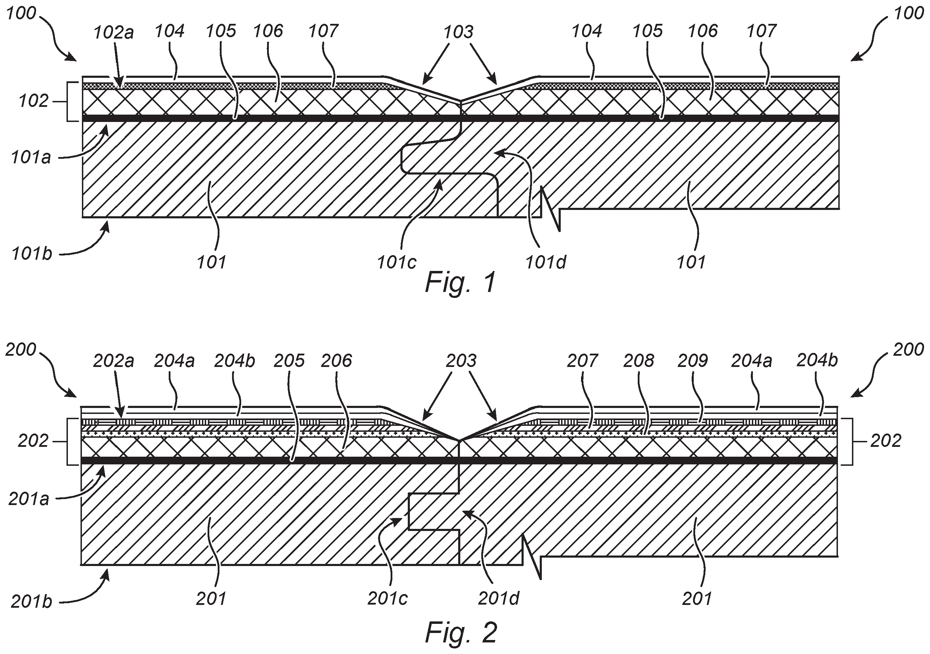

Figure 1 show a cross section of a first possible embodiment two decorative panels 100 according to the present invention. The figure shows in particular a cross section of the panels 100 which are adjacently positioned thereby forming a (floor, wall or ceiling) covering. Each panel 100 comprises a core layer 101, which core layer 101 comprising an upper core surface 101a and a bottom core surface 101b and at least one pair of opposite side edges 101c, 101d. The panels 100 are provided with interlocking coupling means to provide easy coupling between adjacent panels 100. The panels 100 further comprise a decorative top layer 102 disposed on the upper core surface 101a of said core layer 101. Each panel 100 further comprises a chamfer 103 provided a side edge 101c, 101d. In the shown embodiment, the chamfers 103 extend through part of the decorative top layer 102. The core layer 101 is in the shown embodiment not provided with part of the chamfer 103. The panel 100 also comprises a coating layer 104 which covers at least part of the upper surface 102a of the decorative top layer 102 and at least part of the surface of said chamfer 103. The decorative top layer 102 comprises a plurality of layers. In particular, the decorative top layer 102 comprises a décor layer 105, a transparent wear layer 106 and a base coating layer 107. In the shown embodiment, the chamfers 103 extends though both the base coating layer 107 and the transparent wear layer 106.

Figure 2 shows a second possible embodiment of panels 200 according to the present invention. Each panel 200 comprises a core layer 201, which core layer 201 comprises an upper core surface 201a and a bottom core surface 201b and at least one pair of opposite side edges 201c, 201d. Each panel 200 also comprises a decorative top layer 202 attached to the upper core surface 201a of the core layer 201, the decorative top layer comprising an upper surface 202a. Each panel 200 comprises a chamfer 203 provided at at least one of said side edges 201c, 201d, wherein the chamfer 203 extends through part of the decorative top layer 202. The panels 200 further comprise a plurality of coating layers 204a, 204b wherein each layer 204a, 204b covers at least part of the upper surface 202a of the decorative top layer 202 and at least part of the surface of the chamfer 203. The decorative top layer 203 comprises a plurality of layers. In particular, the decorative top layer 203 comprises a décor layer 205, a first transparent wear layer 206, a second transparent wear layer 208, a base coating layer 207, and a further base coating layer 209. The panels 200 are connected via a tongue and groove coupling system. In the shown embodiment, the chamfers 203 extends though the base coating layers 207, 209 and the transparent wear layers 206, 208.

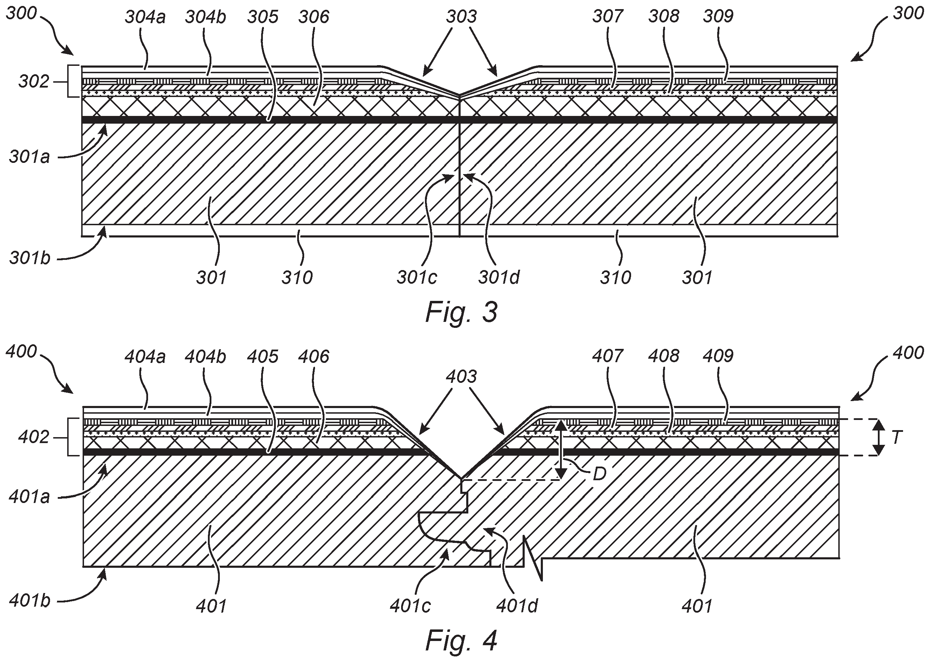

Figure 3 shows a third possible embodiment of panels 300 according to the present invention. Each panel 300 comprises a core layer 301, which core layer 301 comprises an upper core surface 301a and a bottom core surface 301b and at least one pair of opposite side edges 301c, 301d. Each panel 300 also comprises a decorative top layer 302 attached to the upper core surface 301a of the core layer 301, the decorative top layer comprising an upper surface 302a. Each panel 300 comprises a chamfer 303 provided at at least one of said side edges 301c, 301d, wherein the chamfer 303 extends through part of the decorative top layer 302. The panels 300 further comprise a plurality of coating layers 304a, 304b wherein each layer 304a, 304b covers at least part of the upper surface 302a of the decorative top layer 302 and at least part of the surface of the chamfer 303. The decorative top layer 302 substantially equals the decorative top layer as shown in figure 2. The decorative top layer 302 comprises a plurality of layers. In particular, the decorative top layer 302 comprises a décor layer 305, a first transparent wear layer 306, a second transparent wear layer 308, a base coating layer 307, and a further base coating layer 309. The panels 300 of the shown embodiment are not provided with interconnecting coupling means. The panel further comprises a backing layer 310 which is attached to the bottom core surface 301b of the core layer 301. In the shown embodiment, the chamfers 303 extends though the base coating layers 307, 309 and the transparent wear layers 306, 308. The shown embodiment differs from the embodiment of figure 2 in that the thickness of the coating layers 304a, 304b is different at the surface of the chamfer. This may result in a different gloss level. Another difference can be found in the angle of the chamfers when comparing the embodiments.

Figure 4 shows a fourth possible embodiment of panels 400 according to the present invention. Each panel 400 comprises a core layer 401 and a decorative top layer 402. The decorative top layer 402 substantially equals the decorative top layer as shown in figures 2 and 3. The decorative top layer 402 comprises a plurality of layers. In particular, the decorative top layer 402 comprises a décor layer 405, a first transparent wear layer 406, a second transparent wear layer 408, a base coating layer 407, and a further base coating layer 409. Each panel 400 comprises a chamfer 403 provided at at least one of the side edges 401c, 401d, wherein the chamfer 403 extends through the decorative top layer 402 and through part of the core layer 401. It can be seen that the depth D of the chamfer 403 is larger than the thickness T of the decorative top layer 402. The panels 400 are provided with interlocking coupling means to provide easy coupling between adjacent panels 400.

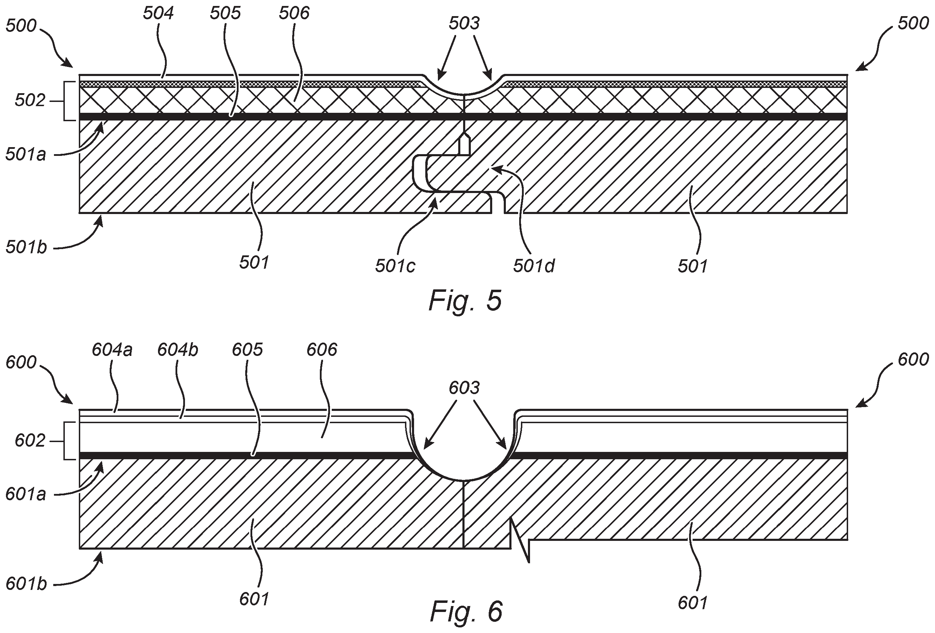

Figure 5 shows a fifth possible embodiment of panels 500 according to the present invention. Each panel 500 comprises a core layer 501 and is provided with interlocking coupling means to provide easy coupling between adjacent panels 500. The panels 500 further comprise a decorative top layer 502 disposed on the upper core surface 501a of said core layer 501. Each panel 500 further comprises a chamfer 503 provided a side edge 501c, 501d. In the shown embodiment, the chamfers 503 extend through part of the decorative top layer 502. The core layer 501 is in the shown embodiment not provided with part of the chamfer 503. Each panel 500 also comprises a coating layer 504 which covers at least part of the upper surface 502a of the decorative top layer 502 and at least part of the surface of said chamfer 503. The decorative top layer 502 comprises a plurality of layers. In particular, the decorative top layer 502 comprises a décor layer 505, a transparent wear layer 506 and a base coating layer 507. In the shown embodiment, the chamfers 503 extends though both the base coating layer 507 and the transparent wear layer 506. In the embodiments of figures 1-4, the chamfers 103, 203, 303, 403 have a substantially linear shape, defining a V-shape in an interconnected state. In the shown embodiment, the chamfers 503 have a substantially convex shape. It can be seen that the chamfers 503 of the two adjacent panels 500 define a substantially U-shaped cut-out portion.

Figure 6 shows a sixth possible embodiment of panels 600 according to the present invention. Each panel 600 comprises a core layer 601 and a decorative top layer 602. The panels 600 are not provided with any coupling means. Each panel 600 further comprises a chamfer 603. In the shown embodiment, the chamfers 603 extend through part of the decorative top layer 602 and through the core layer 601. Each panel 600 also comprises a first coating layer 604a, and a second coating layer 604b which covers at least part of the upper surface of the decorative top layer 602 and at least part of the surface of said chamfer 603. The decorative top layer 602 comprises a plurality of layers. In particular, the decorative top layer 602 comprises a décor layer 605 and a transparent wear layer 606. In the shown embodiment, the chamfers 603 of the panels 600 have a substantially convex shape, such that the two adjacent panels 600 define a substantially U-shaped cut-out portion.

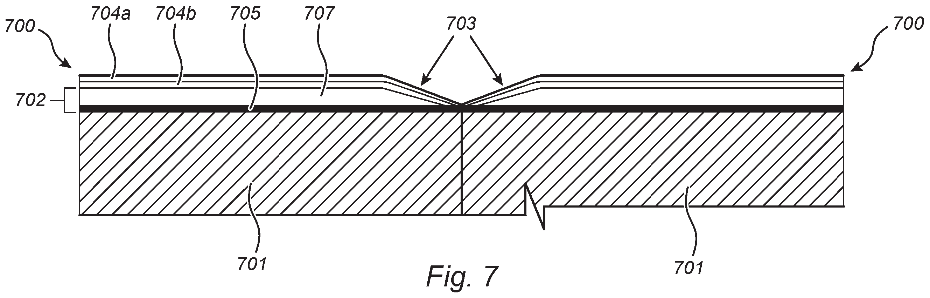

Figure 7 shows a seventh possible embodiment of panels 700 according to the present invention. Each panel 700 comprises a core layer 701 and a decorative top layer 702. The panels 700 of the shown embodiment are not provided with any coupling means. Each panel 700 further comprises a chamfer 703. In the shown embodiment, the chamfers 703 extend through part of the decorative top layer 702. Each panel 700 also comprises a first coating layer 704a, and a second coating layer 704b which covers at least part of the upper surface of the decorative top layer 702 and at least part of the surface of said chamfer 703. The decorative top layer 702 comprises a plurality of layers. In particular, the decorative top layer 702 comprises a décor layer 705 and a base coating layer 707. In the shown embodiment, the chamfers 703 of the panels 700 extent up to the décor layer 705, such that the décor of the décor layer 705 is directly visible through the (transparent) coating layers 704a, 704b.

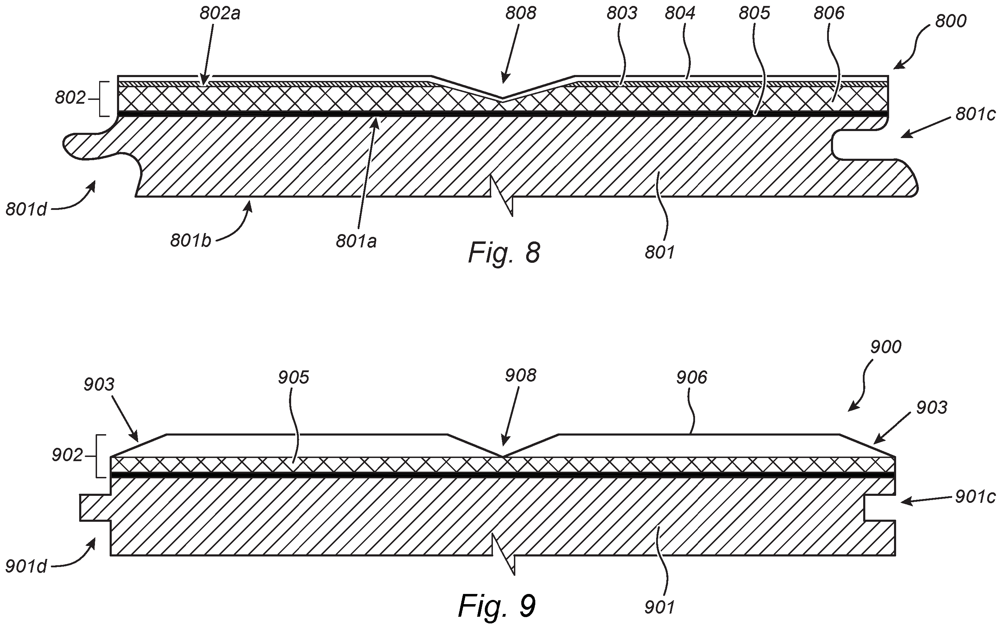

Figure 8 show a cross section of an eighth possible embodiment of a decorative panel 800 according to the present invention. The figure shows in particular a cross section of the panel 800. The panel 800 comprises a core layer 801, which core layer 801 comprising an upper core surface 801a and a bottom core surface 801b and at least one pair of opposite side edges 801c, 801d. The panel 800 is provided with interlocking coupling means to provide easy coupling between adjacent panels. The panel 800 further comprise a decorative top layer 802 disposed on the upper core surface 801a of said core layer 801. The panel 800 further comprises a chamfer 808, or longitudinal groove 808, provided at a distance from the side edges 801c, 801d. In the shown embodiment, the chamfer 808 extend through part of the decorative top layer 802. The panel 800 also comprises a coating layer 804 which covers at least part of the upper surface 802a of the decorative top layer 802 and at least part of the surface of said chamfer 808. The decorative top layer 802 comprises a plurality of layers. In particular, the decorative top layer 802 comprises a décor layer 805, a transparent wear layer 806 and a base coating layer 807. In the shown embodiment, the chamfer 808 extends though both the base coating layer 807 and the transparent wear layer 806.

Figure 9 show a cross section of an nineth possible embodiment of a decorative panel 900 according to the present invention. The figure shows in particular a cross section of the panel 900. The panel 900 comprises a core layer 901, a decorative top layer 902 and at least one pair of opposite side edges 901c, 901d. The panel 900 is provided with interlocking coupling means to provide easy coupling between adjacent panels. The panel 900 comprises a chamfers 903 provided at the side edges 901c, 901d, wherein the chamfer 903 extends through part of the decorative top layer 902. The panel 900 further comprises a further chamfer 908, or longitudinal groove 908, provided at a distance from the side edges 901c, 901d. In the shown embodiment, the chamfer 908 extend through part of the decorative top layer 902. The decorative top layer 902 comprises a décor layer 805 and a transparent wear layer 906.

The above-described inventive concepts are illustrated by several illustrative embodiments. It is conceivable that individual inventive concepts may be applied without, in so doing, also applying other details of the described example. It is not necessary to elaborate on examples of all conceivable combinations of the above-described inventive concepts, as a person skilled in the art will understand numerous inventive concepts can be (re)combined in order to arrive at a specific application.

The verb "comprise" and conjugations thereof used in this patent publication are understood to mean not only "comprise", but are also understood to mean the phrases "contain", "substantially consist of", "formed by" and conjugations thereof. When it is referred to reinforcing layer also a reinforcing element can be meant, or vice versa.

## Claims

1. Decorative panel, in particular a building panel, comprising:
- at least one core layer, the core layer comprising an upper core surface and a bottom core surface and at least one pair of opposite side edges,
- at least one decorative top layer attached to the upper core surface of said core layer, the decorative top layer comprising an upper surface,
- at least one pressed chamfer provided at at least one of said side edges,
wherein the at least one pressed chamfer has a shape which is curvilinear, triangle, quatrefoil, ellipse, crescent, trefoil, circular, linear and/or substantially convex,
- at least one coating layer which covers at least part of the upper surface of the decorative top layer and at least part of the surface of said chamfer.

2. Panel according to claim 1, wherein the coating layer is a substantially transparent coating layer.

3. Panel according to any of the preceding claims, wherein the decorative top layer comprises at least one décor layer and at least one transparent wear layer and/or at least one base coating layer.

4. Panel according to any one of the preceding claims, wherein the coating forming the coating layer is applied with a weight of at least 1-50g/m2 per layer, preferably 4-40g/m2 per layer, more preferably 5-15g/m2 per layer and/or wherein the viscosity of the coating layer is smaller than 5000 Pa.s at 25 degrees Celsius, preferably between 500 and 3000 Pa.s at 25 degrees Celsius and more preferably between 800 and 1500 Pa.s at 25 degrees Celsius, in an uncured condition.

5. Panel according to any of the preceding claims, wherein the angle of the at least one pressed chamfer ranges from 2 to 30 degrees, preferably from 4 to 15 degrees, and even more preferably from 6 to 9 degrees.

6. Panel according to any one of the preceding claims, wherein the decorative top layer includes at least one décor layer selected from the group comprising: a PVC decorative film, a PP decorative film, a PET decorative film, a stone veneer and/or a wood veneer or wherein the décor layer is formed by a decorative print which is printed directly on the upper core surface of the core layer.

7. Panel according to any one of the preceding claims, wherein the decorative top layer includes a tactile texture of at least 0.1mm depth.

8. Panel according to any one of the preceding claims, wherein at least one coating layer is a polyurethane coating, an acrylic coating, and/or an epoxy polyol coating.

9. Panel according to any one of the preceding claims, wherein at least one coating layer comprises a thermoset resin and a photoinitiator cross-linked by a UV or electron beam curing process.

10. Panel according to any one of the preceding claims, wherein the gloss level of the upper surface of the decorative top layer substantially equals the gloss level of the surface of the at least one pressed chamfer.

11. Panel according to any one of the preceding claims, wherein the gloss level of at least one coating layer ranges from 3% to 100%, preferably from 40% to 60% or from 3% to 12% and in particular from 4% to 8%.

12. Panel according to any one of the preceding claims, wherein the core layer comprises at least one mineral material and at least one binder.

13. Panel according to any of the preceding claims, wherein at least one pair of opposite side edges is provided with complementary coupling parts.

14. Method for producing a decorative panel, in particular a panel according to any one of the preceding claims, comprising the steps of:
a) providing at least one core board, the core board comprising an upper core surface and a bottom core surface,
b) attaching at least one decorative top layer upon the upper core surface of said core board,
c) cutting the laminated core board into at least two panels,
d) providing, by means of a pressing method, at least one pressed chamfer on at least one side edge of at least one panel, wherein at least one pressed chamfer has a shape which is curvilinear, triangle, quatrefoil, ellipse, crescent, trefoil, circular, linear and/or substantially convex, and
e) applying a coating upon the upper surface of the decorative top layer and the surface of the at least one pressed chamfer such that a coating layer is formed and covers at least part of the upper surface of the decorative top layer and at least part of the surface of said chamfer.

15. Method according to claim 14, wherein step b) comprises the step of providing a texture on the upper surface of the decorative top layer and/or wherein step d) further comprises the step of profiling and/or edging at least one side edge of at least one panel.
